Europäisches Patentamt

European Patent Office

Office européen des brevets

(11) Publication number: **0 276 639**
**A1**

## EUROPEAN PATENT APPLICATION

(21) Application number: 87830464.1

(51) Int. Cl.⁴ **F16L 37/04**

(22) Date of filing: 23.12.87

(30) Priority: 30.01.87 IT 2890587 U

(43) Date of publication of application:
03.08.88 Bulletin 88/31

(84) Designated Contracting States:
DE ES FR GB

(71) Applicant: **Officine Augusto CATTANI & C.**
**S.P.A.**
**Via G. Natta, 6/A**
**I-43100 Parma(IT)**

(72) Inventor: **Cattani, Augusto**
**Via Zanardi n. 12**
**I-43100 Parma(IT)**

(74) Representative: **Lanzoni, Luciano**
**c/o BUGNION S.p.A. Viale Trento Trieste, 25**
**I-41100 Modena(IT)**

(54) **A clamp ring, in particular for tube connections.**

(57) The clamp ring (3) serves as a fastener for tube connections, and comprises two identical arched components (4), fashioned with matching tongues (8) and sockets (9) at each end, which are snapped together to form a collar.

# Fig.1

EP 0 276 639 A1

The invention relates to a clamp ring, in particular for tube connections.

A preferred application of the clamp ring disclosed is that of effecting joins with flexible tube of non-uniform outer diameter.

The clamp ring is also particularly suitable for fastening the end of a length of flexible tube to a fitting or union offered by the equipment to which it must be attached.

The object of the invention is that of setting forth a clamp ring suitable for use in connections of the type mentioned above, which on the one hand affords singular ease of application combined with a good ability for adaptation to different diameters, and on the other, is extremely simple in design, and therefore easily manufactured.

Another object of the invention is to create a clamp ring consisting of a plurality of identical parts in reciprocal assembly.

The invention will now be described in detail, by way of example, with the aid of the accompanying drawings, in which:

fig 1 is a schematic representation of the ring, viewed frontally and partly in section;

fig 2 is the side elevation of a part of fig 1;

fig 3 is an axial section through the clamp ring, applied to a fitted tube.

With reference to the drawings, 1 denotes a flexible tube of the type conventionally used with suction equipment in dentistry, one end of which is fitted to a union 2. A firm connection between the tube 1 and the union 2 is ensured by a clamp ring 3 applied directly to the outer cylindrical surface of the tube 1. A specifically embodied part of the outer surface of the clamp ring 3, in its turn, locates internally of the union 2 in a tight fit.

The clamp ring 3 comprises two arched components 4 of perfectly semicircular embodiment, the internal surface of each one of which exhibits a straight inner cylindrical profile 5; the external surface of each component exhibits two outer bands 6 distanced symmetrically by a central rib 7, with which they merge, likewise symmetrically. Each semicircular component 4 exhibits a tongue 8 at one end, and at the other, a socket 9 that serves to accept the corresponding tongue 8 of an identical component 4, accommodating it entirely or in part; thus, two components are joined together to make up one ring. Each tongue 8 is provided with transverse teeth 10 that are designed to enter into an interference fit with at least one corresponding catch 11 offered by the socket 9 in which the tongue 8 locates.

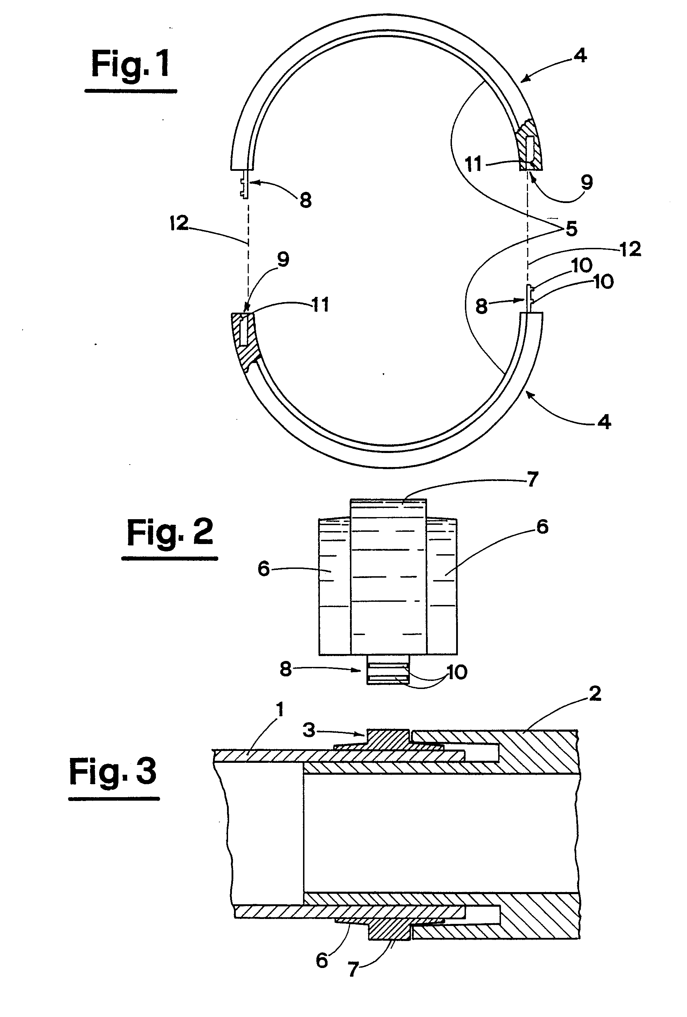

Insertion and extraction of the tongue 8 into and from the socket 9 in the direction indicated by the lines 12 of fig 1 is enabled by the flexible and deformable properties of the joint created between the two parts in question 8 and 9.

Where the tongue 8 is provided with a plurality of teeth 10, it becomes possible to join two arched components 4 as illustrated in fig 1, and therefore to accommodate different diameters: this is rendered practicable by virtue of the fact that the tongue 8 and the socket 9 alike are disposed substantially tangential to the relative arched component 4.

Each of the outer bands 6 of the external surface is in effect a part of the surface of a right circular cone: the two symmetrical parts are coaxial, their relative diameters decreasing progressively with the increase in axial distance from the central rib 7. Accordingly, one band 6 of the ring 3 can be located in the union 2 in order to produce a tight fit. Embodied differently, the bands 6 of the external surface might consist in a plurality of distinct right cylindrical bands decreasing progressively in diameter and arranged in succession with the bands of smaller diameter farthest from the central rib 7. Application of the clamp ring 3 to the tube 1 is extremely simple, involving no more than to offer two identical arched components 4 to the external surface of the tube in the relative positions shown in fig 1, i.e. such that the tongue 8 and socket 9 of the one component are aligned with the socket 9 and the tongue 8 of the other.

At this point, it will be sufficient to press the two components together around the tube 1 to the point where the tongues 8 enter the sockets 9 at either side and remain fast, thanks to the flexible and deformable embodiment of the two mating parts. More exactly, with the tongue inserted at each side, the teeth 10 are engaged by the relative catch 11, and unforced separation of the two components 4 is prevented. This accomplished, the end of the tube can be fitted firmly to a union as in fig 3.

## Claims

1) A clamp ring, in particular for tube connections, characterized

-in that two identical arched components (4) are connected together to form a ring (3);

-in that the single arched component exhibits a tongue (8) at one end, and at the remaining end, a socket (9) that wholly or partly accommodates the corresponding tongue of a further identical arched component offered thereto to form a ring; and

-in that the tongue (8) is provided with a set of transverse teeth (10) designed to enter into an interference fit with at least one corresponding catch (11) offered by the socket (9), and insertion and extraction of the tongue (8) into and from the socket (9) is enabled by the flexible and deformable properties of the interference fit.

2) A ring as in claim 1, wherein the single arched component (4) is of semicircular embodiment. and exhibits an internal surface affording a straight inner cylindrical profile (5), and an external surface consisting in two outer bands (6) that are distanced symmetrically by and merged symmetrically with a central rib (7).

3) A ring as in claim 2, wherein the tongue (8) and the socket (9) of the single arched component (4) are disposed substantially tangential to the semicircle.

4) A ring as in claim 2, wherein the outer bands (6) of the external surface consist in at least two parts of respective right circular cone surfaces and are disposed coaxially in such a way that their relative diameters decrease progressively with the increase in axial distance from the central rib (7).

5) A ring as in claim 2, wherein each outer band (6) of the external surface consists in a plurality of right cylindrical bands arranged in succession and decreasing progressively in diameter such that the bands of smaller diameter are located farthest from the central rib (7).

0 276 639

**Fig.1**

**Fig. 2**

**Fig. 3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 220 919 (FORD-WERKE AG) <br> * Figures * <br> --- | 1 | F 16 L 37/04 |
| Y | EP-A-0 060 379 (WELLA AG) <br> * Figures 1,2 * <br> --- | 1 | |
| Y | FR-A-2 437 558 (PONT-A-MOUSSON) <br> * Figures * <br> ----- | 1 | |
| | | | **TECHNICAL FIELDS SEARCHED (Int. Cl.4)** |
| | | | F 16 L |

The present search report has been drawn up for all claims

| Place of search | Date of completion of the search | Examiner |
|---|---|---|
| THE HAGUE | 22-04-1988 | BARTSCH A.W. |

EPO FORM 1503 03.82 (P0401)